# EUROPEAN PATENT SPECIFICATION

(11) **EP 0 792 212 B1**
(45) Date of publication and mention of the grant of the patent: **25.02.2004**
(21) Application number: 95939938.7
(22) Date of filing: 14.11.1995
(51) Int. Cl.: B32B 29/00, B65D 5/08

(54) **Process and apparatus for forming carton blanks**
Verfahren und Vorrichtung zur Herstellung von Kartonzuschnitte
Procédé et appareil pour la production des découpes pour cartons

(30) Priority: 14.11.1994 US 336982; 09.12.1994 US 352526; 25.10.1995 US 548191
(43) Date of publication of application: 03.09.1997
(73) Proprietor: GRAPHIC PACKAGING CORPORATION, Paoli Pennsylvania 19301 (US)
(72) Inventor: WALSH, Joseph, Christopher, Longmont, CO 80501 (US)
(74) Representative: Ebner von Eschenbach, Jennifer
(86) International application number: PCT/US1995/014763
(87) International publication number: WO 1996/014986

(56) References cited:
- US-A- 1 564 374
- US-A- 2 565 944
- US-A- 2 946 370
- US-A- 2 977 271
- US-A- 3 399 096
- US-A- 3 750 538
- US-A- 3 934 587
- US-A- 3 976 527
- US-A- 4 254 173
- US-A- 4 471 884
- US-A- 4 808 363

## Description

This invention relates generally to the formation of individual carton blanks and more specifically to the lamination of materials and the cutting and creasing thereof to form individual carton blanks having cut and fold lines from which leakproof cartons can be formed.

There are many supposedly leakproof cartons on the market today. These are formed using a variety of methods. Some of the cartons are designed to hold granular materials while others are designed to hold liquid materials. While some of these leakproof cartons have been successful, there is always a need for improvement.

In some processes for forming the carton blanks for forming leakproof cartons, apparatus is used to laminate together a continuous strip of a relatively rigid material and a continuous strip of a relatively flexible material. In the formation of individual carton blanks having cut and fold lines, it is conventional to form the cut and fold lines in the product after lamination.

US Patent 4,254,173 discloses forming a packaging material by laminating a plastic film to a paper material and thereafter scoring, cutting and folding the material to form a secondary container package.

According to the present invention, there is provided an apparatus for use in forming carton blanks and including a pair of laminating rolls having facing portions to form a nip therebetween, drive means for rotating at least one of the laminating rolls to rotate both laminating rolls, first feeding apparatus including a first guide for feeding a continuous strip of a relatively rigid material into the nip, second feeding apparatus including a second guide for feeding a continuous strip of a relatively flexible fluid impervious material into the nip, adhesive coating means for applying an adhesive coating material to at least a portion of the continuous strip of a relatively flexible fluid impervious material so that at least portions of the continuous strip of relatively rigid material and the continuous strip of relatively flexible fluid impervious material are secured together as they pass between the laminating rolls, rotary cutting and creasing means for forming cut and fold lines in at least the continuous strip of relatively rigid material to form a plurality of successive carton blanks in the continuous strip of relatively rigid material, cutting means located after the laminating rolls for cutting the laminated continuous strip of relatively rigid material and the continuous strip of relatively flexible fluid impervious material into individual carton blanks, and collecting means for collecting the individual carton blanks, wherein the rotary cutting and creasing means are mounted at a location prior to the continuous strip of relatively rigid material contacting the continuous strip of relatively flexible fluid impervious material and being laminated thereto by the laminating rolls, the rotary cutting and creasing means forming at least some of the cut and fold lines for the successive plurality of carton blanks.

According to the present invention, there is also provided a method of using apparatus for the formation of individual carton blanks, the apparatus comprising a pair of laminating rolls having facing portions to form a nip therebetween, drive means for rotating at least one of the laminating rolls to rotate both laminating rolls, first feeding apparatus including a first guide for feeding a continuous strip of a relatively rigid material into the nip, second feeding apparatus including a second guide for feeding a continuous strip of a relatively flexible fluid impervious material into the nip, adhesive coating means for applying an adhesive coating material to at least a portion of the continuous strip of a relatively flexible fluid impervious material so that at least portions of the continuous strip of a relatively rigid material and the continuous strip of a relatively flexible fluid impervious material are secured together as they pass between the laminating rolls, rotary cutting and creasing means for forming cut and fold lines in at least the continuous strip of a relatively rigid material to form a plurality of successive carton blanks in the continuous strip of a relatively rigid material, cutting means located after the laminating rolls for cutting the laminated continuous strips of a relatively rigid material and the continuous strip of a relatively flexible fluid impervious material into individual carton blanks and collecting means for collecting the individual carton blanks, whereby mounting of the rotary cutting and creasing means is at a location prior to the continuous strip of a relatively rigid material contacting the continuous strip of a relatively flexible fluid impervious material and being laminated thereto by the laminating rolls, and wherein cutting and creasing at least some of the cut lines and fold lines for the successive plurality of carton blanks by the rotary cutting and creasing means is done before lamination. In one preferred embodiment of the invention the apparatus comprises a first roll mounted at a fixed location for rotational movement and a second rotatable roll mounted adjacent to the first roll so as to form a nip therebetween. Drive means are provided for rotating at least one or both of the first and second rolls. At least a first guide means are located to guide a continuous strip of a relatively rigid material into the nip. At least a second guide means are located to guide a continuous strip of a relatively flexible material, preferably a fluid impervious material, into the nip so that the continuous strip of a relatively rigid material and the continuous strip of a relatively flexible, fluid impervious material have facing surfaces. While the guide means are illustrated as rolls, it is understood that they can be of other configurations. An adhesive coating is applied to at least portions of at least one of the facing surfaces. The at least a first guide means and the at least a second guide means are located so that the continuous strip of a relatively rigid material and the continuous strip of a relatively flexible material enter the nip only from one side of a plane tangent to the first roll and the second roll at the nip to secure at least portions of the continuous strips together. The portions of the adhesive coating are located so that a plurality of spaced apart strips of the relatively rigid material and the relatively flexible fluid impervious material are not secured together. Preferably, the portions of the adhesive coating are on the facing surface of the continuous strip of a relatively flexible fluid impervious material. The first and second guide means are located so that the continuous strip of a relatively rigid material contacts the first roll before the continuous strip of a relatively flexible fluid impervious material contacts the continuous strip of a relatively rigid material. Alternatively, the first and second feeding means may be located so that the continuous strip of a relatively rigid material contacts the second roll before the continuous strip of a relatively flexible fluid impervious material contacts the continuous strip of a relatively rigid material.

Rotary cutting and creasing rolls are located before the first and second rolls for forming cut and fold lines in the continuous strip of a relatively rigid material and removing scrap material. Some cut lines are not made in the continuous strip of a relatively rigid material so that the continuous strip of a relatively rigid material-may be pulled through the laminating apparatus. If two carton blanks are being formed at the same time the laminated materials pass between a first pair of cutting rolls which cut the continuous strip of a relatively flexible fluid impervious material located between the carton blanks to be formed. The laminates then pass through a second pair of cutting rolls where the cut lines not previously made can be made to form the individual carton blanks which are then collected.

At least a third guide means may be provided to guide a plurality of spaced apart, relatively narrow continuous strips of a relatively flexible material into the nip. The third guide means are located so that the plurality of spaced apart, relatively narrow continuous strips of a flexible material are located between the continuous strip of a relatively rigid material and the continuous strip of a relatively flexible material. At least other portions of an adhesive coating are located to secure the plurality of spaced -apart, relatively narrow continuous strips of a relatively flexible material to portions of the continuous strip of a relatively flexible, fluid impervious material but not to the continuous strip of a relatively rigid material. In one instance, the continuous strip of a relatively rigid material comprises a composite material, as described below, the plurality of spaced apart, relatively narrow continuous strips of a relatively flexible material comprises paper, such as Kraft paper, and the continuous strip of a relatively flexible, fluid impervious material comprises a plastic film, such as polypropylene.

The rotary cutting and creasing rolls and the first and second pair of cutting rolls function as described above. In addition to cutting the continuous strip of a relatively flexible material, the first pair of cutting rolls also cuts the center continuous strip of a relatively narrow continuous strip of a relatively flexible material.

Collecting means are provided to form the individual carton blanks into one or more vertical stacks. The individual carton blanks are placed on the one vertical or more stacks so that the relatively flexible, fluid impervious material faces upwardly.

In some instances, depending on the thickness and quality of the continuous strip of a relatively rigid material, the cutting and creasing rolls do not remove the scrap material. In those instances, rolls located after the laminating apparatus remove the scrap material.

Additionally, a cut-out may be made in the top and bottom edges of the glue tab panel portion. When forming the carton from the carton blank, a continuous bead of hot melt adhesive is superposed over the exposed surface of the first sheet of relatively flexible material, the top cut-out, the glue tab panel portion, the bottom cut-out and the second sheet of relatively flexible material.

Portions of the first and second sheets of relatively flexible material and the glue tab panel portion may be folded over and secured to adjacent portions of the first and second sheets of relatively flexible material and the glue tab panel portion.

The apparatus for forming a laminate of materials may comprise a driven coating applicator roll mounted at a fixed location for rotational movement. The coating applicator roll has a raised body portion for use in transferring coating materials. Coating means may be provided for applying an adhesive coating to the raised body portion. An idler roll would be mounted for rotational movement and for applying pressure on the raised body portion. First feeding means are provided for feeding a continuous film of a relatively flexible fluid impervious material between the coating applicator roll and the idler roll to apply a coating of adhesive on the continuous film of a relatively flexible fluid impervious material. A drive roll is mounted at a fixed location for rotational movement. Another idler roll is mounted for rotational movement and for applying pressure on the drive roll. Second feeding means are provided for feeding the adhesive coated continuous film of a relatively flexible fluid impervious material, a plurality of continuous strips of a relatively flexible material in spaced apart relationship and a continuous strip of a relatively rigid material between the drive roll and the another idler roll to laminate and secure together the plurality of continuous strips of a relatively flexible material to portions of the adhesive coated continuous film of a relatively flexible fluid impervious material and portions of the continuous strip of a relatively rigid material to other portions of the continuous film of a relatively flexible fluid impervious material. Processing apparatus are provided for further processing said laminated materials. The coating applicator roll applies the adhesive coating to the bottom surface of the continuous film of a relatively flexible fluid impervious material and inverting means are provided for inverting the continuous film of a relatively flexible fluid impervious material so that the bottom surface becomes a top surface.

The raised body portion comprises the entire outer surface of the applicator roll, or the raised body portion comprises two circumferentially extending edge portions and a plurality of spaced apart axially extending portions extending into the two circumferentially extending edge portions.

In the alternative, the apparatus for forming a laminate of materials may comprise a driven coating applicator roll mounted at a fixed location for rotational movement wherein the coating applicator roll has a central raised body portion for use in transferring coating materials. Coating means are provided for applying an adhesive coating to the raised body portions. An idler roll is mounted for rotational movement and for applying pressure on the raised body portion. First feeding means are provided for feeding a continuous film of a relatively flexible fluid impervious material between the coating applicator roll and the idler roll to apply a coating of adhesive on the central body portion of the continuous film of a relatively flexible fluid impervious material. A drive roll is mounted at a fixed location for rotational movement and another idler roll is mounted for rotational movement and for applying pressure on the drive roll. Second feeding means are provided for feeding the adhesive coated continuous film of a relatively flexible fluid impervious material and a continuous strip of a relatively rigid material between the drive roll and the another idler roll to laminate and secure together the central body portion of the continuous strip of a relatively flexible fluid impervious material and the central body portion of the continuous strip of a relatively rigid material. The raised central body portion is continuous or the coating applicator roll has opposite end portions with the raised central body portion comprising two circumferentially extending edge portions, each spaced from said opposite end portions and a plurality of spaced apart axially extending portions extending into the two circumferentially extending edge portions.

Illustrative and presently preferred embodiments of the invention are shown in the drawings in which:
Fig. 1 is a schematic illustration of one embodiment of the invention;
Fig. 2 is a schematic illustration of another embodiment of the invention;
Fig. 3 is a top plan view of a continuous strip of a relatively rigid material having cut and fold lines prior to lamination;
Fig. 4 is a top plan view of two individual carton blanks;
Fig. 5 is a cross-sectional view of one embodiment of a carton blank;
Fig. 6 is a cross-sectional view of another embodiment of a carton blank;
Fig. 7 is a partial top plan view of another preferred embodiment of the invention;
Fig. 8 is an enlarged view of portions of Fig. 7;
Fig. 9 is a partial top plan view of another preferred embodiment of the invention;
Fig. 10 is a view similar to Fig. 9 after one folding operation;
Fig. 11 is a schematic illustration of apparatus of another preferred embodiment of the invention;
Fig. 12 is a bottom plan view of Fig. 11;
Fig. 13 is a top plan view of a carton blank of another preferred embodiment of the invention;
Fig. 14 is an end elevation taken from the right side of Fig. 13;
Fig. 15 is a schematic illustration of apparatus of another preferred embodiment of the invention; and
Figs. 16 - 18 illustrate various types of adhesive patterns on the continuous strip of a relatively flexible, fluid impervious material or the continuous strip of a relatively rigid material.

### Detailed Description of the Invention

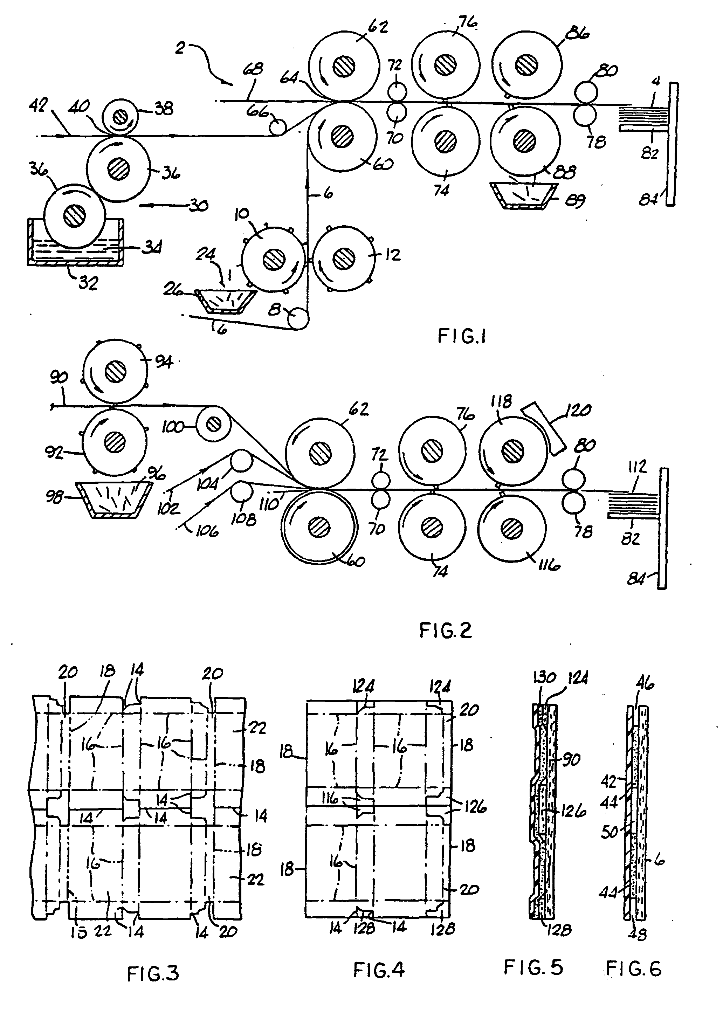

In Fig. 1, there is illustrated apparatus 2 for making individual carton blanks 4. A continuous strip of a relatively rigid material 6 from a roll of such material (not shown) is moved around guide roll 8 into the nip between cutting and creasing rolls 10 and 12 which are rotated in the direction of the arrows by conventional means (not shown). The relatively rigid material comprises a conventional paperboard or a composite material such as that described in United States Patent No. 4,254,173 dated March 31, 1981 and issued to Peer, Jr. or other materials having similar characteristics. The cutting and creasing rolls 10 and 12 make the cut lines 14 and fold lines 16 in the continuous strip of a relatively rigid material 6. The cut lines 18, illustrated as phantom lines, between the glue tab 20 of one carton blank and the side panel 22 of the preceding carton blank are not made at this time so that the continuous strip of a relatively rigid material 6 can be pulled through the laminating operations as described below. Scrap material 24 is deposited from the cutting and creasing roll 10 into a hopper 26.

Coating apparatus 30 is mounted at a fixed location. The coating apparatus 30 has a tank 32 for holding a supply of adhesive coating material 34. A rotatable transfer roll 36 is mounted so as to move into contact with the supply of the adhesive coating material 34. A driven gravure roll 36 is mounted so that raised portions thereof (not shown) will contact the transfer roll 36 to have adhesive coating material 34 transferred to the raised portion of the gravure roll 36. The gravure roll 36 is driven by conventional means (not shown). An idler roll 38 is mounted to form a nip between it and the gravure roll 36 and to apply pressure on the gravure roll 36. A continuous strip of a relatively flexible, fluid impervious material 42 is pulled from a roll of such material (not shown) and passes through the nip 40 and has the adhesive coating material on the gravure roll 36 deposited thereon. The continuous sheet of a relatively flexible, fluid impervious material may comprise a plastic material such as polypropylene, a paper material coated with a plastic material, such as polyethylene, or other materials having similar characteristics. The pattern of the adhesive coating material may be varied. In this instance, the pattern of the raised portions of the gravure roll 36 comprises two spaced apart circumferentially extending raised portions to produce the laminated product illustrated in Fig. 6. This product comprises the relatively flexible, fluid impervious material 42 secured to the relatively rigid material 6 by two spaced apart strips 44 of adhesive so that no adhesive is at the end portions 46 and 48 and the central portion 50. The central portion 50 is twice as wide as the end portions 46 and 48 so that the product illustrated in Fig. 6 may be severed to provide two individual carton blanks 4.

It is understood that the continuous strip of a relatively rigid material 6 of Fig. 3 can be of differing shapes and have differing cut and fold line arrangements. Also, other conventional methods and materials can be used to secure together the continuous strip of a relatively rigid material and the continuous strip of a relatively flexible material.

A conventional laminating apparatus is illustrated in Fig. 1 and comprises a first roll 60 and a second roll 62 mounted to form a nip 64. Either one or both of the first and second rolls 60 and 62 may be driven by conventional means (not shown) and either one or both may be provided with a flexible surface (not shown). The first and second rolls 60 and 62 function to pull the continuous strip of a relatively rigid material 6 through the cutting and creasing rolls 10 and 12 and the continuous strip of a relatively flexible fluid impervious material 42 through the gravure roll 36 and idler roll 38 and to form the laminate. The cutting and creasing rolls 10 and 12 are located to function as guide means so that the continuous strip of a relatively rigid material moves into contact with the first roll 60. Guide means 66 are located to guide the continuous strip of a relatively flexible, fluid impervious material 42 so that the facing surfaces of the continuous strip of a relatively rigid material 6 and the continuous strip of a relatively flexible, fluid impervious material 42 move into a contacting relationship. The cutting and creasing rolls 10 and 12 and the guide means 66 are located so that the continuous strip of a relatively rigid material 6 and the continuous strip of a relatively flexible, fluid impervious material 42 enter the nip 64 only from one side of a plane 68 tangent to the first and second rolls 60 and 62 at the nip 64.

It is understood that the adhesive coating material may be applied to the continuous strip of a relatively rigid material. In such an embodiment, the apparatus is arranged so that the continuous strip of a relatively rigid material contacts the surface of the first or second roll and then the continuous strip of a relatively flexible, fluid impervious material is superposed over the continuous strip of a relatively rigid material. Also, the continuous strip of a relatively rigid material and the continuous strip of a relatively flexible material enter the nip only from one side of a plane tangent to the first and second rolls at the nip.

The laminated product then moves between cutting rolls 70 and 72 which cuts the continuous strip of a relatively flexible, fluid impervious material in the machine direction at the central portion 50 to form two laminated products which then pass between cutting rolls 74 and 76 which cut the cut lines 18 between the glue tab 20 of one carton blank and the side panel 22 of the preceding carton blank. After being cut, the carton blanks 4 are fed by feed rolls 78 and 80 into stacking apparatus which is schematically illustrated as a vertically moveable platform 82 which is mounted for movement over support means 84. The laminated product is moved through the cutting rolls 70, 72, 74 and 76 to the feed rolls 78 and 80 in a conventional manner. The upper surface of the carton blanks 4 stacked on the platform 82 comprises from the relatively flexible, fluid impervious material 42. There can be more than one stacking apparatus.

In some instances, depending on the thickness and quality of the continuous strip of a relatively rigid material 6, the cutting and creasing rolls 10 and 12 do not remove the cut scrap material 24. In those instances, rolls 86 and 88 remove the cut scrap material 24 and deposit it into a hopper 89.

In Fig. 2 there is illustrated another alternative of the present invention wherein a continuous strip of a relatively rigid material 90 moves into the nip between cutting and creasing rolls 92 and 94 which are rotated in the direction of the arrows by conventional means (not shown) to form the product described above and illustrated in Fig. 3. Scrap material 96 is deposited from the cutting and creasing roll 92 into the hopper 98. The continuous strip of a relatively rigid material 90 is similar to the continuous strip, of a relatively rigid material 6. It is understood that carton blanks differing from the carton blanks of Fig. 3 may be made by changing the configuration of the cutting and creasing means on the cutting and creasing rolls 10, 12, 92 and 94.

The portions of the laminating, cutting and stacking apparatus of Fig. 2 corresponding to similar portions the laminating, cutting and stacking apparatus of Fig. 1 and have been given the same reference numerals. After passing through the cutting and creasing rolls 92 and 94, the continuous strip of a relatively rigid material 90 moves over guide means 100 into contact with the second roll 62. A plurality of spaced apart, relatively narrow continuous strips of a relatively flexible material 102 are pulled from rolls of such material (not shown) and move over guide means 104 so that facing surfaces of the continuous strip of a relatively rigid material 90 and the plurality of spaced apart, relatively narrow continuous strips of a relatively flexible material 102 move into a contacting relationship. A continuous strip of a relatively flexible, fluid impervious material 106, which has been provided with an adhesive coating by coating apparatus (not shown), similar to coating apparatus 30 but having a different pattern, moves over guide means 108 so that a facing surface thereof moves into contacting relationship with the facing surfaces of the plurality of spaced apart, relatively narrow continuous strips of a relatively flexible material 104 and the portions of the facing surface of the continuous strip of the relatively rigid material 90 not in contact with the facing surfaces of the plurality of spaced apart, relatively narrow continuous strips of the relatively flexible material 104 to form a laminate described more fully below. The guide means 100, 104 and 108 are located so that the continuous strip of a relatively rigid material 90, the plurality of spaced apart, relatively narrow continuous strips of a relatively flexible material 102 and the continuous strip of a relatively flexible, fluid impervious material 106 enter the nip 64 only from one side of a plane 110 tangent to the first and second rolls 60 and 62 at the nip 64. The laminated product then passes through the cutting rolls 70 and 72 to cut the strip of a relatively flexible, fluid impervious material 106 and the continuous strip of a relative flexible material secured thereto to form two laminated products which then pass between the cutting rolls 74 and 76 which cut the cut lines 18 between the glue tab 20 of one carton blank and the side panel 22 of the preceding carton blank. After being cut, the carton blanks 112 are fed into conventional inverting apparatus (not shown) which inverts the carton blanks 112 so that the upper surfaces of the carton blanks 112 on the platform 82 comprise the relatively flexible, fluid impervious material 106.

As described above, in some instances, depending on the thickness and quality of the continuous strip of a relatively rigid material 90, the cutting and creasing rolls 92 and 94 do not remove the cut scrap material 96. In those instances, roll 116 and 118 remove the cut scrap material 96 and a vacuum manifold 120 removes the cut scrap material 96 from the roll 118.

The carton blank 112 illustrated in Figs. 4 and 5 comprises a laminate of the relatively rigid material 90, the plurality of spaced apart relative narrow strips of a relatively flexible material 124, 126 and 128, which are not secured to the relatively rigid material 90, and an adhesive coating 130 that secures the spaced apart relative narrow continuous strips of a relatively flexible material 124, 126 and 128 to portions of the relatively flexible, fluid impervious material 106 and other portions of the relatively flexible fluid impervious material 106 to portions of the relatively rigid material 90. The strip 126 is twice as wide as the strips 124 and 128 so that two carton blanks 112 can be formed. The continuous strips 124, 126 and 128 may be formed from a Kraft paper or other materials having similar characteristics.

As described above, other methods and materials may be used to form the laminate and the adhesive coating material may be applied to the continuous strip of a relatively rigid material and the plurality of spaced apart, relatively narrow continuous strips of a relatively flexible material.

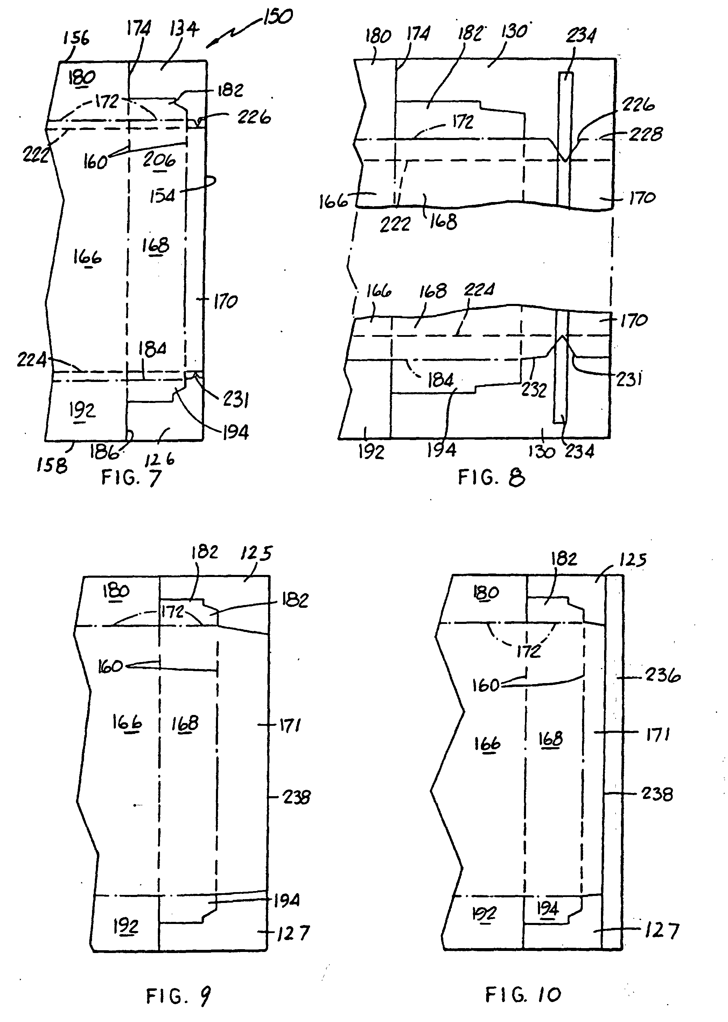

In Figs. 7 and 8, there is illustrated a portion of a carton blank 150 of another preferred embodiment of the invention. The carton blank 150 has a right side edge 154, a top edge 156 and a bottom edge 158. A plurality of fold lines 160 divide the carton blank 150 into a front panel portion 166, a right side panel 168 and a glue tab panel 170. A plurality of fold lines 172 and a plurality of cut lines 174 divide the carton blank 150 into a top, front panel portion 180, and top right side panel portion 182. A plurality of fold lines 184 and cut lines 186 divide the carton blank 150 into a bottom front panel portion 192 and a bottom right side panel portion 194. When the continuous strips 124, 126, 128, and the upper portion of the relatively flexible material 106 are fed into the apparatus of Fig. 2, there is a maximum tolerance distance that the lower edge 222 of the upper continuous strip can be spaced from the fold line 172 and that the upper edge 224 of the lower continuous strip can be spaced from the fold line 184. A cut-out 226 is formed in the upper portion of the glue tab panel portion 170 and extends downwardly from the upper edge 228 for a distance substantially equal to the maximum tolerance distance. Also, a cut-out 231 is formed in the lower portion of the glue tab panel portion 170 and extends upwardly from the lower edge 232 for a distance substantially equal to the maximum tolerance distance. Although the cut-outs 226 and 230 are illustrated as V-shaped, it is understood that they can be of other geometrical configurations. Also, although the cut-out portions 226 and 231 are illustrated as extending completely through the glue tab panel portion 170, it is understood that they can extend, only partially through the glue tab panel portion 170. When a carton is formed from the carton blank of Figs. 7 and 8 by folding around the fold lines 160, a continuous bead 234 of adhesive, such as a hot melt adhesive, is superposed over the upper continuous strip 124, the cut-out 226, the glue tab panel portion 170, the cut-out 230 and the lower continuous strip 126 so that these portions may be secured to superposed portions of the continuous strip of the relatively flexible liquid impervious material 106.

In Figs. 9 and 10, there is illustrated another alternative of the carton blank illustrated in Fig. 7 and in which corresponding parts are identified with the same reference numerals. In Fig. 9, the portion 125 of the continuous strip 124 of Fig. 7, the portion 127 of the continuous strip 126 of Fig. 7 and-the glue tab panel portion 171 of the glue tab panel portion of Fig. 7 are made wider. Prior to the folding of the carton blank around the fold lines 160, portions 236 of the upper and lower continuous strips 125 and 127 and the glue tab panel portion 171 are folded-back over and secured to adjacent portions of the upper and lower continuous strips 125 and 127 and the glue tab panel portion 171. When a carton is formed from the carton blank, a bead (not shown) of adhesive, such as a hot melt adhesive, is superposed over the edge 238 formed by the folded over portions 236.

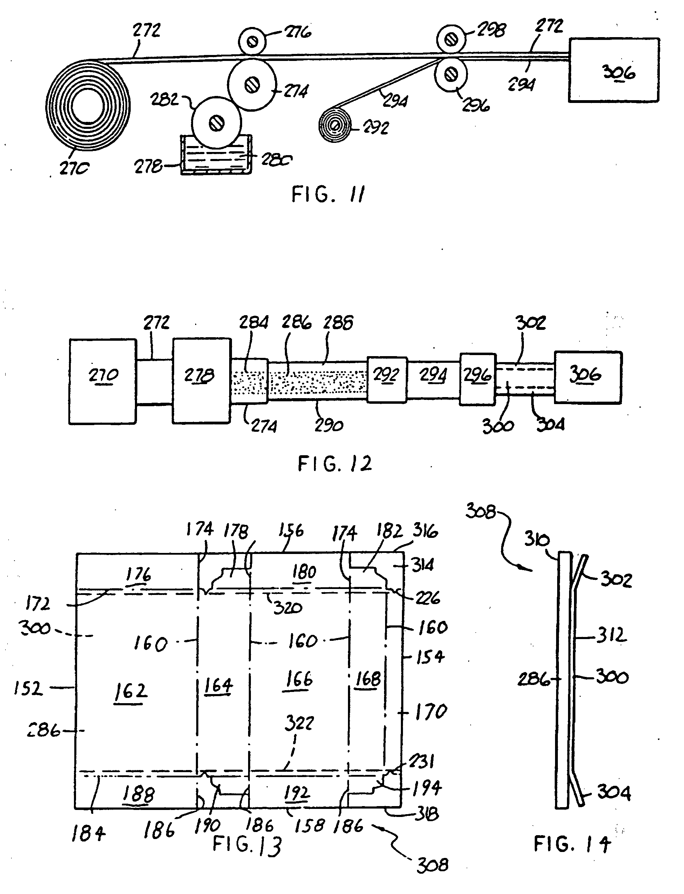

In the alternative illustrated in Figs. 11 and 12, a roll 270 of a relatively rigid paperboard material, such as that described above, is mounted so that a continuous strip 272 may be removed therefrom. The continuous strip 272 moves between a driven gravure roll 274 and an idler pressure applying roll 276. A supply tank 278 is mounted at a fixed location and holds a supply of a suitable adhesive material 280. A transfer roll 282 is rotatably mounted to pass through the adhesive material 280 and then to contact the raised surface 284 of the gravure roll 274 to coat the raised surface 284 with the adhesive material 280 and the gravure roll 274 then coats the central body portion 286 of the continuous strip 272 with the adhesive material 280 leaving opposite edge portions 288-and 290 uncoated. Although a gravure roll is preferred, it is understood that other types of rolls can be used to apply the adhesive material to the continuous strip 272.

A roll 292 of a relatively flexible fluid impervious material is mounted so that a continuous strip 294 may be removed therefrom. The roll 292 of a relatively flexible fluid impervious material can comprise a plastic coated paper material, such as that described above, but preferably comprises a laminated material, such as a kraft paper and a film of polypropylene or other materials having similar characteristics laminated thereto or a film of a plastic material. The continuous strip 272 and the continuous strip 294 are passed between a driven roll 296 and an idler pressure applying roll 298 to secure the central body portion 300 of the continuous strip 294 to the central body portion 286 of the continuous strip 272 leaving opposite edge portions 302 and 304 unsecured. The continuous strip 272 and the continuous strip 294 are then passed through conventional apparatus 306 to provide the continuous strip 272 with cut and fold lines. In Figs. 11 and 12, the continuous strip 272 is illustrated as being of a width so that only one coating of adhesive is applied thereto. However, it is understood that the continuous strip 272 can have a width so that a plurality of spaced apart adhesive coatings may be applied to the continuous strip 272 so that a plurality of continuous strips 294 can also be secured thereto.

In Figs. 13 and 14, there is illustrated a carton blank 308 formed by the process illustrated in Figs. 11 and 12. The carton blank 308 has an outer surface 310 and an inner surface 312. The carton blank 308 is similar to the carton blank 150 of Figs. 7 and 8 except that the continuous strips 124, 126 and 128 have not been included and corresponding parts have been identified with the corresponding reference numerals. Other portions of the carton blank 150 include a left side edge 152, a back panel portion 162, a left side panel portion 164, a top back panel portion 176, a top left side panel portion 178, a bottom back portion 188, a bottom left side panel portion 190. The central body portion 300 of a rectangularly shaped sheet 314 of the flexible plastic film 294 is adhesively secured to the central body portion 286 of the relatively rigid paperboard material so that the opposite edge portions 302 and 304 are unsecured. As illustrated, portions of the edges of the rectangularly shaped sheet 314 underlie the edges 152, 154, 156 and 158. However, it is understood that the top edge 316 of the rectangularly shaped sheet 314 may be spaced from the top edge 156 and the bottom edge 318 of the rectangularly shaped sheet 314 may be spaced from the bottom edge 158. As illustrated in Fig. 13, the central body portions 286 and 300 are secured together between the lines 320 and 322.

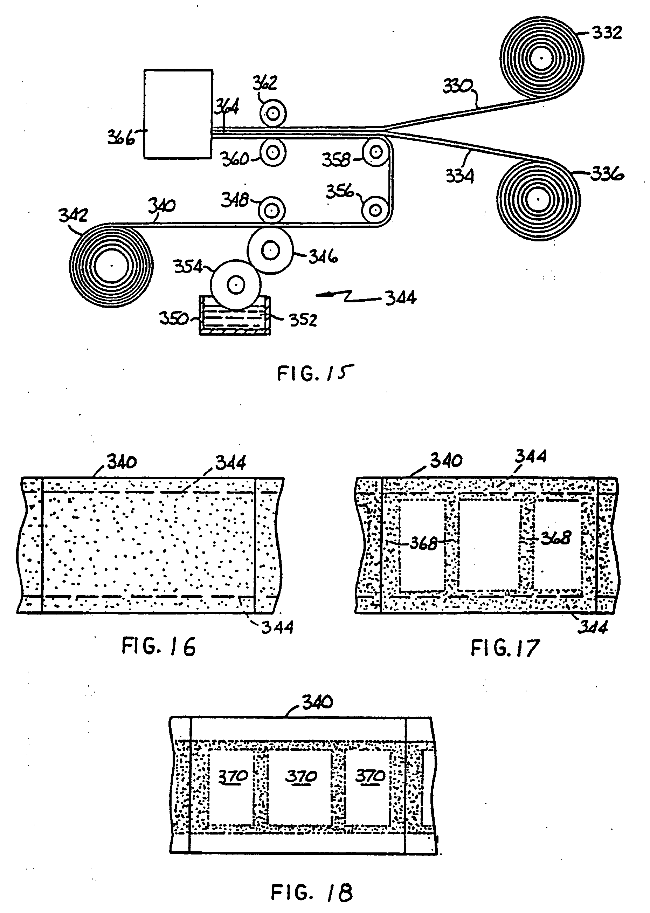

In a further alternative as schematically illustrated in Fig. 15, a continuous strip 330 of a relatively rigid material, such as paperboard, is pulled from the roll 332. A plurality of strips 334 of a relatively flexible material, similar to the strips 124, 126, and 128 are pulled from the roll 336 and are positioned at spaced apart locations beneath the continuous strip 330 for movement therewith.

A continuous strip 340 of a relatively flexible fluid impervious material, such as those described above, is pulled from the roll 342 and fed into an adhesive coating station 344. The continuous film 340 is fed between a driven gravure roll 346 having at least one raised surface and an idler pressure applying roll 348. A supply tank 350 is mounted at a fixed location and holds a supply of a suitable adhesive material 352. A transfer roll 354 is rotatably mounted to pass through the adhesive material 352 and then to contact the raised surfaces of the gravure roll 346 to coat them with the adhesive material 352. The coated continuous film 340 passes over guide roller 356 and 358. The coated continuous film 340, the strips 334 and the continuous strip 330 pass between a drive roll 360 and a pressure applying idler roll 362 to secure the strips 334 to the coated continuous film 340 and the portions of the continuous strip 330 of a relatively rigid material between the strips 334 to the continuous film 340. In some instances both the drive roll 360 and the idler roll 362 are driven. The laminated product 364 is then fed into conventional apparatus 366 for further processing. Although a gravure roll is disclosed, it is understood that any conventional apparatus can be used to apply the adhesive material to the continuous film 340.

Some of the patterns of the adhesive materials applied by the gravure rolls 36 and 346 are illustrated in Figs. 16 - 18. If the gravure roll 36 or 346 applies a continuous film of the adhesive material as illustrated in Fig. 16 in the apparatus of Figs. 2 and 15, then the plurality of strips 104 or 334 and the portions of the continuous strip 90 or 330 between the continuous strip 104 or 334 will be adhered to the continuous strip of a relatively flexible, fluid impervious material 106 or 340. If desired, the gravure roll 36 or 346 can apply an adhesive pattern as illustrated in Fig. 17 so that the continuous strip 90 or 330 is adhered to the continuous strip 106 or 340 at spaced apart intervals 368. The gravure roll 36, 274, and 346, if the continuous strips 334 are omitted, can apply a pattern of adhesive to the continuous strip 6 and 340 or the continuous strip 272, as illustrated in Fig. 18, to secure the central body portion of the continuous strip 42, 294 or 340, to the central body portion of the continuous strip 6, 272 and 330. If the continuous strips have been omitted, the pattern will contain non adhesive areas 370.

## Claims

1. Apparatus for use in forming carton blanks and including a pair of laminating rolls (60, 62) having facing portions to form a nip (64) therebetween, drive means for rotating at least one of said laminating rolls to rotate both laminating rolls, first feeding apparatus including a first guide (8, 100) for feeding a continuous strip (6, 90) of a relatively rigid material into said nip, second feeding apparatus including a second guide (66, 108) for feeding a continuous strip (42, 106) of a relatively flexible fluid impervious material into said nip, adhesive coating means (30) for applying an adhesive coating material (34) to at least a portion of said continuous strip of a relatively flexible fluid impervious material so that at least portions of said continuous strip of a relatively rigid material and said continuous strip of a relatively flexible fluid impervious material are secured together as they pass between said laminating rolls, rotary cutting and creasing means (10, 12, 92, 94) for forming cut and fold lines in at least said continuous strip of a relatively rigid material to form a plurality of successive carton blanks in said continuous strip of a relatively rigid material, cutting means (74,76) located after said laminating rolls (60, 62) for cutting said laminated continuous strip of a relatively rigid material and said continuous strip of a relatively flexible fluid impervious material into individual carton blanks (4) and collecting means (82) for collecting said individual carton blanks, **characterized in that** said rotary cutting and creasing means (10, 12, 92, 94) are mounted at a location prior to said continuous strip of relatively rigid material contacting said continuous strip of relatively flexible fluid impervious material and being laminated thereto by said laminating rolls (60, 62), said rotary cutting and creasing means forming at least some of said cut and fold lines for said successive plurality of carton blanks.

2. The apparatus as claimed in claim 1, **characterized in that** said at least some of said cut and fold lines comprise all of said cut and fold lines except for a cut line (18) in a direction perpendicular to the machine direction, between adjacent ones of said plurality of carton blanks for forming individual carton blanks.

3. The apparatus as claimed in claim 1 or 2, **characterized in that** said apparatus includes a third feeding means having guide means (104) mounted before said laminating rolls (60, 62) for feeding a plurality of continuous, spaced apart strips (102) of a relatively flexible material into said nip, located between said continuous strip (90) of a relatively rigid material and said continuous strip (106) of a relatively flexible fluid impervious material, so that at least portions of said plurality of continuous, spaced apart strips (102) of a relatively flexible material are secured to at least portions of said continuous strip (106) of a relatively flexible fluid impervious material but not to said continuous strip (90) of a relatively rigid material as they pass between said laminating rolls.

4. The apparatus as claimed in claim 1 or 2, **characterized in that** said continuous strips of relatively rigid material (6) and of relatively flexible fluid impervious material (42) have opposite side edges, and said portions of adhesive coating material (34) being located so that a plurality of spaced apart strips (46, 48, 50) of said relatively rigid material (6) and said relatively flexible fluid impervious material (42) are not secured together.

5. A method of using apparatus for the formation of individual carton blanks wherein the apparatus comprises a pair of laminating rolls (60, 62) having facing portions to form a nip (64) therebetween, drive means for rotating at least one of said laminating rolls to rotate both laminating rolls, first feeding apparatus including a first guide (8, 100) for feeding a continuous strip (6, 90) of a relatively rigid material into said nip, second feeding apparatus including a second guide (66, 108) for feeding a continuous strip (42, 106) of a relatively flexible fluid impervious material into said nip, adhesive coating means (30) for applying an adhesive coating material (34) to at least a portion of said continuous strip of a relatively flexible fluid impervious material so that at least portions of said continuous strip of a relatively rigid material and said continuous strip of a relatively flexible fluid impervious material are secured together as they pass between said laminating rolls, rotary cutting and creasing means (10, 12, 92, 94) for forming cut and fold lines in at least said continuous strip of a relatively rigid material to form a plurality of successive carton blanks in said continuous strip of a relatively rigid material, cutting means (74, 76) located after said laminating rolls (60, 62) for cutting said laminated continuous strips of a relatively rigid material and said continuous strip of a relatively flexible fluid impervious material into individual carton blanks (4) and collecting means (82) for collecting said individual carton blanks, **characterized by** mounting said rotary cutting and creasing means (10, 12, 92, 94) at a location prior to said continuous strip of a relatively rigid material contacting said continuous strip of a relatively flexible fluid impervious material and being laminated thereto by said laminating rolls (60, 62), and cutting and creasing at least some of said cut lines and fold lines for said successive plurality of carton blanks by said rotary cutting and creasing means before lamination.

## Patentansprüche

1. Vorrichtung zur Verwendung zur Gestaltung von Kartonzuschnitten und mit einem Paar von Laminierwalzen (60, 62) mit zueinander ausgerichteten Abschnitten, um dazwischen einen Spalt (64) zu bilden, mit einer Antriebseinrichtung zum Drehen zumindest einer der genannten Laminierwalzen, um beide Laminierwalzen zu drehen, mit einer ersten Zufuhrvorrichtung, die eine erste Führungseinrichtung (8, 100) für die Zufuhr eines Endlosstreifens (6, 90) aus einem verhältnismäßig steifen Material in den genannten Spalt aufweist, eine zweite Zufuhrvorrichtung mit einer zweiten Führungseinrichtung (66, 108) für die Zufuhr eines Endlosstreifens (42, 106) aus einem verhältnismäßig flexiblen, Fluid undurchlässigen Material in den genannten Streifen, mit einer Klebstoffüberzugeinrichtung (30) zum Auftragen eines Klebstoffüberzugmaterials (34) auf zumindest ein Teilstück des genannten Endlosstreifens aus einem verhältnismäßig flexiblen, Fluid undurchlässigen Material, so dass zumindest Teilstücke des genannten Endlosstreifens aus einem verhältnismäßig steifen Material und des genannten Endlosstreifens aus einem verhältnismäßig flexiblen, Fluid undurchlässigen Material aneinander angebracht sind, wenn sie zwischen den genannten Laminierwalzen hindurch verlaufen, mit Rotations-Schneide- und Falzeinrichtungen (10, 12, 92, 94) zur Gestaltung von Schnittund Falzlinien zumindest in dem genannten Endlosstreifen aus einem verhältnismäßig steifen Material, um eine Mehrzahl aufeinanderfolgender Kartonzuschnitte in dem genannten Endlosstreifen aus einem verhältnismäßig steifen Material zu bilden, mit einer Schneideeinrichtung (74, 76), die hinter den genannten Laminierwalzen (60, 62) angeordnet ist, um den genannten laminierten Endlosstreifen aus einem verhältnismäßig steifen Material und den genannten Endlosstreifen aus einem verhältnismäßig flexiblen, Fluid undurchlässigen Material in einzelne Kartonzuschnitte (4) zu schneiden, und mit einer Sammeleinrichtung (82) zum Sammeln der genannten einzelnen Kartonzuschnitte, **dadurch gekennzeichnet, dass** die genannten Rotations-Schneide- und Falzeinrichtungen (10, 12, 92, 94) an einer Position angebracht sind, bevor der genannte Endlosstreifen aus einem verhältnismäßig steifen Material den genannten Endlosstreifen aus einem verhältnismäßig flexiblen, Fluid undurchlässigen Material berührt und durch die genannten Laminierwalzen (60, 62) an diesen laminiert wird, wobei die genannten Rotations-Schneide- und Falzeinrichtungen zumindest einige der genannten Schnitt- und Falzlinien für die genannte aufeinanderfolgende Mehrzahl von Kartonzuschnitten bildet.

2. Vorrichtung nach Anspruch 1, **dadurch gekennzeichnet, dass** die genannten zumindest einige der genannten Schnitt- und Falzlinien alle genannten Schnitt- und Falzlinien umfassen, mit Ausnahme einer Schnittlinie (18) in einer Richtung, die senkrecht zu der Maschinenrichtung verläuft, zwischen benachbarten Zuschnitten der genannten Mehrzahl von Kartonzuschnitten, so dass einzelne Kartonzuschnitte gebildet werden.

3. Vorrichtung nach Anspruch 1 oder 2, **dadurch gekennzeichnet, dass** die genannte Vorrichtung eine dritte Zufuhreinrichtung mit einer Zufuhreinrichtung (104) aufweist, die vor den genannten Laminierwalzen (60, 62) angebracht ist, um eine Mehrzahl von beabstandeten Endlosstreifen (102) aus einem verhältnismäßig flexiblen Material dem genannten Spalt zuzuführen, der sich zwischen dem genannten Endlosstreifen (90) aus einem verhältnismäßig steifen Material und dem genannten Endlosstreifen (106) aus einem verhältnismäßig flexiblen, Fluid undurchlässigen Material befindet, so dass zumindest Teilstücke der genannten Mehrzahl beabstandeter Endlosstreifen (102) aus einem verhältnismäßig flexiblen Material zumindest an Teilstücken des genannten Endlosstreifens (106) aus einem verhältnismäßig flexiblen, Fluid undurchlässigen Material angebracht sind, jedoch nicht an dem genannten Endlosstreifen (90) aus einem verhältnismäßig steifen Material, wenn die Streifen zwischen den genannten Laminierwalzen verlaufen.

4. Vorrichtung nach Anspruch 1 oder 2, **dadurch gekennzeichnet, dass** die genannten Endlosstreifen aus einem verhältnismäßig steifen Material (6) und aus einem verhältnismäßig flexiblen, Fluid undurchlässigen Material (42) entgegengesetzte Seitenkanten aufweisen, und wobei die genannten Teilstücke des Klebstoffüberzugsmaterials (34) so angeordnet sind, dass eine Mehrzahl beabstandeter Streifen (46, 48, 50) des genannten verhältnismäßig steifen Materials (6) und des genannten verhältnismäßig flexiblen, Fluid undurchlässigen Materials (42) nicht aneinander angebracht sind.

5. Verfahren zur Verwendung einer Vorrichtung zur Gestaltung von Kartonzuschnitten, wobei die Vorrichtung ein Paar von Laminierwalzen (60, 62) mit zueinander ausgerichteten Abschnitten umfasst, um dazwischen einen Spalt (64) zu bilden, mit einer Antriebseinrichtung zum Drehen zumindest einer der genannten Laminierwalzen, um beide Laminierwalzen zu drehen, mit einer ersten Zufuhrvorrichtung, die eine erste Führungseinrichtung (8, 100) für die Zufuhr eines Endlosstreifens (6, 90) aus einem verhältnismäßig steifen Material in den genannten Spalt aufweist, eine zweite Zufuhrvorrichtung mit einer zweiten Führungseinrichtung (66, 108) für die Zufuhr eines Endlosstreifens (42, 106) aus einem verhältnismäßig flexiblen, Fluid undurchlässigen Material in den genannten Streifen, mit einer Klebstoffüberzugeinrichtung (30) zum Auftragen eines Klebstoffüberzugmaterials (34) auf zumindest ein Teilstück des genannten Endlosstreifens aus einem verhältnismäßig flexiblen, Fluid undurchlässigen Material, so dass zumindest Teilstücke des genannten Endlosstreifens aus einem verhältnismäßig steifen Material und des genannten Endlosstreifens aus einem verhältnismäßig flexiblen, Fluid undurchlässigen Material aneinander angebracht sind, wenn sie zwischen den genannten Laminierwalzen hindurch verlaufen, mit Rotations-Schneide- und Falzeinrichtungen (10, 12, 92, 94) zur Gestaltung von Schnittund Falzlinien zumindest in dem genannten Endlosstreifen aus einem verhältnismäßig steifen Material, um eine Mehrzahl aufeinanderfolgender Kartonzuschnitte in dem genannten Endlosstreifen aus einem verhältnismäßig steifen Material zu bilden, mit einer Schneideeinrichtung (74, 76), die hinter den genannten Laminierwalzen (60, 62) angeordnet ist, um den genannten laminierten Endlosstreifen aus einem verhältnismäßig steifen Material und den genannten Endlosstreifen aus einem verhältnismäßig flexiblen, Fluid undurchlässigen Material in einzelne Kartonzuschnitte (4) zu schneiden, und mit einer Sammeleinrichtung (82) zum Sammeln der genannten einzelnen Kartonzuschnitte, **gekennzeichnet durch** die Anbringung der genannten Rotations-Schneide- und Falzeinrichtungen (10, 12, 92, 94) an einer Position vor dem Kontakt des genannten Endlosstreifens aus einem verhältnismäßig steifen Material mit dem genannten Endlosstreifen aus einem verhältnismäßig flexiblen, Fluid undurchlässigen Material und die Laminierung daran **durch** die genannten Laminierwalzen (60, 62), und Schneiden und Falzen zumindest einiger der genannten Schnittlinien und Falzlinien für die genannte aufeinanderfolgende Mehrzahl von Kartonzuschnitten **durch** die genannten Schneide- und Falzeinrichtungen vor der Laminierung.

## Revendications

1. Appareil pour la production des découpes pour carton et comprenant une paire de cylindres de laminage (60, 62) ayant des parties de face pour former une ligne de contact (64) entre elles, des moyens d'entraînement pour entraîner en rotation au moins l'un desdits cylindres de laminage afin de faire tourner les deux cylindres de laminage, le premier appareil d'alimentation comprenant un premier guide (8, 100) pour alimenter une bande continue (6, 90) d'un matériau relativement rigide dans ladite ligne de contact, le second appareil d'alimentation comprenant un second guide (66, 108) pour alimenter une bande continue (42, 106) d'un matériau relativement souple imperméable au fluide dans ladite ligne de contact, des moyens de revêtement adhésif (30) pour appliquer un matériau de revêtement adhésif (34) au moins sur une partie de ladite bande continue d'un matériau relativement souple imperméable au fluide, de sorte qu'au moins des parties de ladite bande continue d'un matériau relativement rigide et de ladite bande continue d'un matériau relativement souple imperméable au fluide soient fixées ensemble lorsqu'elles passent entre lesdits cylindres de laminage, des moyens de coupe et de pliage rotatifs (10, 12, 92, 94) pour produire des lignes de coupe et de pli au moins dans ladite bande continue d'un matériau relativement rigide pour produire une pluralité de découpes successives pour carton dans ladite bande continue d'un matériau relativement rigide, des moyens de coupe (74, 76) situés après lesdits cylindres de laminage (60, 62) pour couper ladite bande continue laminée d'un matériau relativement rigide et ladite bande continue d'un matériau relativement souple imperméable au fluide dans des découpes individuelles pour carton (4) et des moyens de collecte (82) pour collecter lesdites découpes individuelles pour carton, **caractérisé en ce que** lesdits moyens de coupe et de pliage rotatifs (10, 12, 92, 94) sont montés au niveau d'une position situé avant ladite bande continue du matériau relativement rigide qui est en contact avec ladite bande continue du matériau relativement souple imperméable au fluide et qui est laminée par lesdits cylindres de laminage (60, 62), lesdits moyens de coupe et de pliage rotatifs produisant au moins certaines desdites lignes de coupe et de pli pour ladite pluralité successive de découpes pour carton.

2. Appareil selon la revendication 1, **caractérisé en ce qu'**au moins certaines desdites lignes de coupe et de pli comprennent toutes lesdites lignes de coupe et de pli excepté pour une ligne de coupe (18) dans une direction perpendiculaire au sens machine, entre les découpes adjacentes de ladite pluralité de découpes pour carton destinée à produire des découpes individuelles pour carton.

3. Appareil selon la revendication 1 ou 2, **caractérisé en ce que** ledit appareil comprend des troisièmes moyens d'alimentation dotés de moyens de guidage (104) montés avant lesdits cylindres de laminage (60, 62) pour alimenter une pluralité de bandes continues espacées (102) d'un matériau relativement souple dans ladite ligne de contact, située entre ladite bande continue (90) d'un matériau relativement rigide et ladite bande continue (106) d'un matériau relativement souple imperméable au fluide, de sorte qu'au moins des parties de ladite pluralité de bandes continues espacées (102) d'un matériau relativement souple sont fixées sur au moins des parties de ladite bande continue (106) d'un matériau relativement souple imperméable au fluide, mais pas sur ladite bande continue (90) d'un matériau relativement rigide lorsqu'elles passent entre lesdits cylindres de laminage.

4. Appareil selon la revendication 1 ou 2, **caractérisé en ce que** lesdites bandes continues de matériau relativement rigide (6) et de matériau relativement souple imperméable au fluide (42) ont des bords latéraux opposés, et lesdites parties de matériau de revêtement adhésif (34) étant situées de sorte qu'une pluralité de bandes espacées (46, 48, 50) dudit matériau relativement rigide (6) et dudit matériau relativement souple imperméable au fluide (42) ne sont pas fixées ensemble.

5. Procédé pour utiliser l'appareil pour la production de découpes individuelles pour carton, dans lequel l'appareil comprend une paire de cylindres de laminage (60, 62) ayant des parties de face pour former une ligne de contact (64) entre elles, des moyens d'entraînement pour entraîner en rotation au moins l'un desdits cylindres de laminage afin de faire tourner les deux cylindres de laminage, le premier appareil d'alimentation comprenant un premier guide (8, 100) pour alimenter une bande continue (6, 90) d'un matériau relativement rigide dans ladite ligne de contact, le second appareil d'alimentation comprenant un second guide (66, 108) pour alimenter une bande continue (42, 106) d'un matériau relativement souple imperméable au fluide dans ladite ligne de contact, des moyens de revêtement adhésif (30) pour appliquer un matériau de revêtement adhésif (34) au moins sur une partie de ladite bande continue d'un matériau relativement souple imperméable au fluide, de sorte qu'au moins des parties de ladite bande continue d'un matériau relativement rigide et de ladite bande continue d'un matériau relativement souple imperméable au fluide soient fixées ensemble lorsqu'elles passent entre lesdits cylindres de laminage, des moyens de coupe et de pliage rotatifs (10, 12, 92, 94) pour produire des lignes de coupe et de pli au moins dans ladite bande continue d'un matériau relativement rigide pour produire une pluralité de découpes successives pour carton dans ladite bande continue d'un matériau relativement rigide, des moyens de coupe (74, 76) situés après lesdits cylindres de laminage (60, 62) pour couper lesdites bandes continues laminées d'un matériau relativement rigide et ladite bande continue d'un matériau relativement souple imperméable au fluide dans des découpes individuelles pour carton (4) et des moyens de collecte (82) pour collecter lesdites découpes individuelles pour carton, **caractérisé en ce que** lesdits moyens de coupe et de pliage rotatifs (10, 12, 92, 94) à une position située avant ladite bande continue d'un matériau relativement rigide qui est en contact avec ladite bande continue d'un matériau relativement souple imperméable au fluide et qui est laminée par lesdits cylindres de laminage (60, 62) et qui coupent et qui plient au moins certaines desdites lignes de coupe et desdites lignes de pli pour ladite pluralité successive de découpes pour carton grâce auxdits moyens de coupe et de pliage rotatifs avant le laminage.
